# EUROPÄISCHE PATENTANMELDUNG

(11) **EP 2 479 122 A1**
(43) Veröffentlichungstag der Anmeldung: **25.07.2012**
(21) Anmeldenummer: 12151156.2
(22) Anmeldetag: 13.01.2012
(51) Int. Cl.: B65G 19/26, B65H 5/16, B65H 31/30

(54) **Fördervorrichtung für Druckprodukte und Verfahren zum Verschwenken von Mitnehmern der Fördervorrichtung**

(30) Priorität: 24.01.2011 CH 1112011
(71) Anmelder: Müller Martini Holding AG, 6052 Hergiswil (CH)
(72) Erfinder: Sägesser, Christoph, 5506 Mägenwil (CH)

(57) **Zusammenfassung**

Die Erfindung betrifft eine Fördervorrichtung (1) für Druckprodukte (17) mit einer Auflagefläche (21), einem Antriebselement (5) und mindestens einem daran befestigten Schubelement (2) zum Transport der Druckprodukte (17). Dabei ist das Schubelement (2) mit einem Träger (3) am Antriebselement (5) befestigt, weist einen mit dem Träger (3) in einem ersten Lagerpunkt (7a) schwenkbar verbundenen Arm (7) sowie einen am Arm (7) angeordneten und gegen die Kraft eines Federelements (9) um den ersten Lagerpunkt (7a) ausschwenkbaren Mitnehmer (6) auf. Das Schubelement (2) weist ein am Träger (3) angeordnetes oder einstückig mit diesem ausgebildetes Kurvenelement (13) mit einer Führungsfläche (15) für einen am Arm (7) angeordneten Läufer (12) auf. Das Federelement (9) besitzt einen von der Führungsfläche (15) abgewandten Befestigungspunkt (9a) sowie am Arm (7) einen der Führungsfläche (15) zugewandten Lagerpunkt (9b). Der Läufer (12) wird vom Federelement (9) an die Führungsfläche (15) angedrückt und ist zum Aus- bzw. Einschwenken des Mitnehmers (6) auf der Führungsfläche (15) bewegbar ausgebildet, wobei die Führungsfläche (15) derart ausgestaltet ist, dass ein Abstand (11) des Lagerpunktes (9b) vom Befestigungspunkt (9a) beim Ausschwenken des Mitnehmers (6) ständig zunimmt.

## Beschreibung

Die Erfindung betrifft eine Fördervorrichtung für Druckprodukte, mit einer Auflagefläche, einem Antriebselement und mindestens einem daran befestigten Schubelement zum Transport der Druckprodukte durch die Fördervorrichtung, wobei das Schubelement mit einem Träger am Antriebselement befestigt ist, einen mit dem Träger in einem ersten Lagerpunkt schwenkbar verbundenen Arm sowie einen am Arm angeordneten und gegen die Kraft eines Federelements um den ersten Lagerpunkt ausschwenkbaren Mitnehmer aufweist. Zudem betrifft die Erfindung ein Verfahren zum Verschwenken eines Mitnehmers eines Schubelements der Fördervorrichtung und eine Einsteckmaschine mit einer solchen Fördervorrichtung.

Im Bereich der Druckweiterverarbeitung spielen Fördervorrichtungen eine wichtige Rolle, um Druckprodukte in den oder durch die Verarbeitungsmaschinen zu transportieren. Dabei werden die auf einer Auflagefläche der Fördervorrichtung aufliegenden Druckprodukte häufig von in regelmässigen Abständen angeordneten Mitnehmern in einer Förderrichtung durch einen Förderkanal transportiert. Alternativ dazu können die Druckprodukte aufgrund ihrer Schwerkraft und der Reibung auch ohne Mitnehmer transportiert werden, wobei in diesem Fall in der Regel aus der Förderebene der Fördervorrichtung herausragende Stifte als Anschläge für die vorlaufenden Kanten der Druckprodukte dienen. Schliesslich können die Druckprodukte auch mittels Greifern transportiert werden.

Neben der Zuverlässigkeit der Fördervorrichtung und einem möglichst schonenden Transport der Druckprodukte ist auch der Aspekt der Sicherheit zu berücksichtigen. Dazu müssen Gefahrenstellen für das Bedienpersonal identifiziert und Massnahmen getroffen werden, um etwaigen Verletzungen vorzubeugen. Eine solche Gefahrenstelle bilden die bereits genannten Mitnehmer oder Anschläge, durch welche beispielsweise die Gliedmassen einer Bedienperson verletzt werden können.

Die EP1086911 A1 offenbart eine Fördervorrichtung mit auslösbaren Schubelementen. Dabei kommen Schubelemente zum Einsatz, deren Mitnehmer nach hinten, d.h. entgegengesetzt der Förderrichtung ausschwenkbar sind. Nachteilig bei dieser Anordnung ist es, dass ein ausgeschwenkter Mitnehmer bis zu seinem "Abtauchen" am stromabwärtigen Ende der Fördervorrichtung in dieser Stellung verbleibt und erst beim Erreichen von Umlenkrollen mittels einer Strebe wieder in die Schubstellung gebracht wird. Weiter stromauf kann der Mitnehmer lediglich durch manuellen Eingriff einer Bedienperson in die Schubstellung zurückgeschwenkt werden, was prozessverlängernd ist und auch gefährlich sein kann.

Die FR2408996 A1 offenbart eine gattungsfremde Vorrichtung zur Aufsammlung von Gemüse. Ziel der Erfindung ist es, eine Beschädigung der Vorrichtung beim Vorliegen von Hindernissen zu vermeiden. Dabei werden mobile Bügel verwendet, welche das Gemüse einsammeln. Kommt ein Hindernis in den Weg des Bügels, so wird dieser nach hinten ausgeschwenkt und richtet sich nach dem Passieren des Hindernisses selbsttätig wieder auf. Dies wird dadurch erreicht, dass ein Federelement an einer Seite exzentrisch vom Lagerpunkt des Bügels und an der anderen Seite an der Bügelspitze befestigt ist. In ausgeschwenkter Stellung ist das Federelement gedehnt und zieht den Bügel wieder in die aufrechte Ausgangslage zurück, sobald das Hindernis nicht mehr auf diesen einwirkt. Ein Nachteil dieser Lösung ist das mit voller Auslösefederkraft erfolgende Emporschnellen des Bügels, wodurch die Bedienpersonen ebenfalls verletzt werden können. Da die "Störkraft" eines Hindernisses weder vorhersehbar noch einstellbar ist, muss das Federelement praktisch überdimensioniert werden.

Die Aufgabe der Erfindung besteht darin, eine bezüglich der Betriebssicherheit verbesserte Fördervorrichtung und ein verbessertes Verfahren zum Ausschwenken von Mitnehmern aufzuzeigen. Diese Aufgabe wird gemäss den Merkmalen der unabhängigen Ansprüche gelöst.

Dazu besitzt das Schubelement der erfindungsgemässen Fördervorrichtung ein am Träger angeordnetes oder einstückig mit dem Träger ausgebildetes Kurvenelement mit einer Führungsfläche für einen am Arm angeordneten Läufer. Dabei weist das Federelement einen von der Führungsfläche abgewandten Befestigungspunkt sowie am Arm einen der Führungsfläche zugewandten Lagerpunkt auf. Der Läufer wird vom Federelement an die Führungsfläche angedrückt und ist zum Aus- bzw. Einschwenken des Mitnehmers auf der Führungsfläche bewegbar ausgebildet, wobei die Führungsfläche derart ausgestaltet ist, dass ein Abstand des Lagerpunktes vom Befestigungspunkt beim Ausschwenken des Mitnehmers ständig zunimmt. Dabei ist der Mitnehmer durch das Federelement vorteilhaft aus jeder Position des Läufers auf der Führungsfläche selbsttätig einschwenkbar ausgebildet.

Bei dem erfindungsgemässen Verfahren zum Verschwenken eines Mitnehmers eines Schubelements der Fördervorrichtung wird der Läufer des Schubelements während des Ausschwenkens des Mitnehmers aus der Schubstellung in die ausgeschwenkte Stellung und umgekehrt auf einer Führungsfläche des am Träger angebrachten Kurvenelements bewegt und dabei vom Federelement an die Führungsfläche angedrückt, wobei ein Abstand des Lagerpunktes vom Befestigungspunkt beim Ausschwenken des Mitnehmers ständig zunimmt und beim Einschwenken des Mitnehmers ständig abnimmt.

Die erfindungsgemässe Fördervorrichtung kommt insbesondere in einer Einsteckmaschine zum Einsatz und weist am Antriebselement in regelmässigen Abschnitten angeordnete Schubelemente auf.

Das Verfahren und die Vorrichtung zur Durchführung des Verfahrens schaffen die Möglichkeit, einerseits ein Zurückschwenken des Mitnehmers in die Schubstellung automatisch, und zwar direkt nachdem eine durch ein Hindernis hervorgerufenen Störkraft entfällt, zu realisieren und andererseits sowohl das Ausschwenken als auch das Zurückschwenken kontrolliert durchzuführen. Insbesondere ermöglicht es die Führungsfläche im Zusammenspiel mit dem Federelement, den Verlauf einer Rückstellkraft für den Mitnehmer so einzustellen, dass z.B. ein mit hoher Kraft und Geschwindigkeit erfolgendes Zurückschnellen des Mitnehmers in die Schubstellung vermieden werden kann.

Ausgewählte Ausführungsformen der Erfindung ergeben sich aus den abhängigen Ansprüchen und werden in der nachfolgenden Beschreibung anhand von Figuren und Beispielen detailliert erläutert. Dabei zeigen:
- Fig. 1: eine perspektivische Ansicht der bevorzugten Ausführungsform der Fördervorrichtung mit einem Mitnehmer in Schubstellung,
- Fig. 2: eine Seitenansicht einer bevorzugten Ausführungsform der Fördervorrichtung mit dem Mitnehmer in Schubstellung,
- Fig. 3: eine Seitenansicht der bevorzugten Ausführungsform der Fördervorrichtung mit dem Mitnehmer in Zwischenstellung,
- Fig. 4: eine Seitenansicht der bevorzugten Ausführungsform der Fördervorrichtung mit dem Mitnehmer in ausgeschwenkter Stellung,
- Fig. 5: eine schematisch dargestellte Ansicht der bevorzugten Ausführungsform der Fördervorrichtung mit dem Mitnehmer in Schubstellung, entgegen der Förderrichtung dargestellt,
- Fig. 6: eine zweite Ausführungsform, in einer Darstellung analog der Fig. 3.

In den Figuren bezeichnen gleiche Bezugszeichen strukturell bzw. funktionell gleich wirkende Bauteile. Positionsangaben sind stets auf die Förderrichtung bezogen.

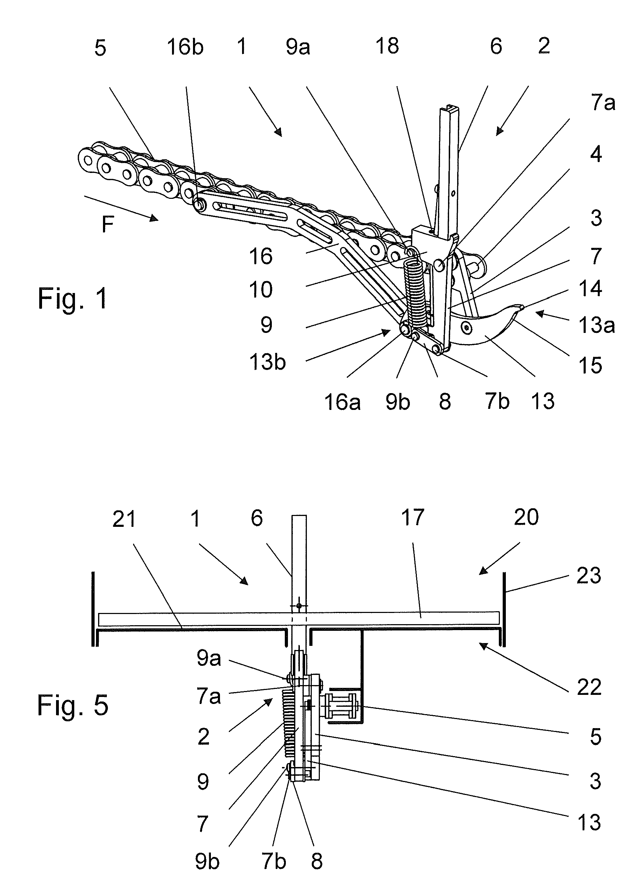

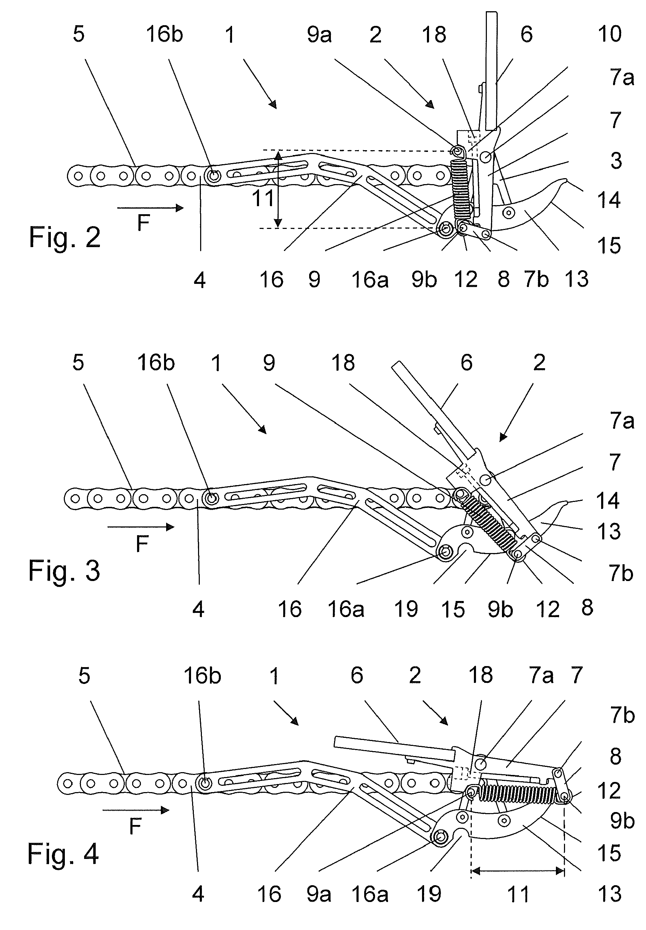

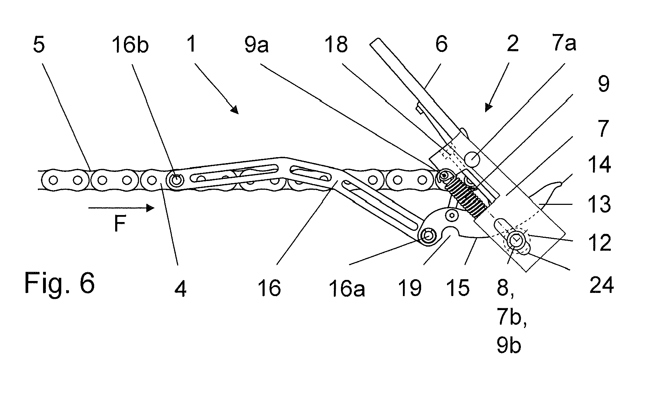

Der Einfachheit halber wird in den Figuren nur ein Teilstück der bevorzugten Ausführungsformen einer Fördervorrichtung 1 mit den für die Erfindung relevanten Bauteilen dargestellt. Übrige Bauteile der Fördervorrichtung 1, wie z.B. Umlenkrollen, etc. sind nicht gezeigt, sie sind jedoch dem Fachmann auf dem Gebiet von Fördervorrichtungen bekannt. Im Gegensatz zu einer in Fig. 3 und Fig. 6 dargestellten "Zwischenstellung" eines Mitnehmers 6 der Fördervorrichtung 1, bezieht sich eine in Fig. 4 gezeigte "ausgeschwenkte Stellung" im vorliegenden Text auf eine maximale Auslenkung des Mitnehmers 6, während die Zwischenstellung eine zwischen der ausgeschwenkten Stellung und einer in Fig. 1 und Fig. 2 dargestellten "Schubstellung" befindliche Position des Mitnehmers 6 bezeichnet.

Fig. 1 zeigt eine perspektivische Ansicht einer bevorzugten Ausführungsform der Fördervorrichtung 1 mit einem Schubelement 2, während Fig. 2 eine Seitenansicht der Fig. 1 darstellt. In beiden Figuren ist eine Förderrichtung F mit einem Pfeil gekennzeichnet. Das Schubelement 2 ist mittels eines Trägers 3 an einem Kettenglied 4 eines als Förderkette ausgebildeten Antriebselements 5 befestigt und umfasst den Mitnehmer 6, welcher sich in Fig. 1 in Schubstellung befindet.

Der Mitnehmer 6 ist vorzugsweise starr an einem Arm 7 befestigt, welcher seinerseits in einem ersten Lagerpunkt 7a schwenkbar am Träger 3 angebracht ist. Der Arm 7 weist in Schubstellung einen in einem unteren Bereich vom ersten Lagerpunkt 7a beabstandeten zweiten Lagerpunkt 7b auf, in dem ein als Verbindungsstück ausgebildetes Halteelement 8 für ein als Zugfeder ausgebildetes Federelement 9 bewegbar angeordnet ist. Der Arm 7 umfasst einen in Schubstellung entgegen der Förderrichtung F auskragenden Vorsprung 10, an welchem ein erstes Ende des Federelements 9 in einem Befestigungspunkt 9a aufgehängt ist. Das Federelement 9 ist mit seinem anderen Ende an einem am Halteelement 8 angeordneten Lagerpunkt 9b befestigt, welcher zudem einen Läufer 12 aufnimmt (Fig. 2). Alternativ kann der Läufer 12 natürlich auch beabstandet vom Lagerpunkt 9b am Halteelement 8 angeordnet sein. Als Läufer 12 wird vorteilhaft ein Rollelement, insbesondere ein Kugellager verwendet. Es können auch andere Läufertypen in Frage kommen, wie z.B. ein Teflonstift. Natürlich können auch andere Federelemente 9, wie beispielsweise Gummibänder oder Druckfedern verwendet werden.

Am Träger 3 ist zudem ein im Wesentlichen vertikal angeordnetes Kurvenelement 13 angebracht. Natürlich kann das Kurvenelement 13 und mit ihm das gesamte Schubelement 2 auch in jeder anderen Richtung im Raum angeordnet werden, wobei insbesondere auch eine gegenüber der Fig. 1 um 180° gedrehte, vertikale Position des Schubelements 2 denkbar ist. Das Kurvenelement 13 weist ein in Förderrichtung F stromab angeordnetes, erstes Ende 13a sowie ein stromauf angeordnetes, zweites Ende 13b auf (Fig. 1). Das erste Ende 13a besitzt einen vorzugsweise als nach unten gebogene Nase ausgebildeten Anschlag 14, welcher an eine vom Mitnehmer 6 abgewandte Führungsfläche 15 des Kurvenelements 13 anschliesst. An seinem zweiten Ende 13b ist das Kurvenelement 13 über eine Fixierstrebe 16 mit dem Antriebselement 5 verbunden. Dazu ist die Fixierstrebe 16 in Förderrichtung F stromauf des Schubelements 2 angeordnet und weist einen ersten, als drehbarer Lagerpunkt ausgebildeten Fixierpunkt 16a zur Anlenkung am Kurvenelement 13 sowie einen zweiten, als drehbarer Lagerpunkt ausgebildeten Fixierpunkt 16b zur Anlenkung am Antriebselement 5 auf. Im dargestellten Ausführungsbeispiel ist der Fixierpunkt 16b an einem weiteren Kettenglied 4 des als Förderkette ausgebildeten Antriebselements 5 angeordnet.

Die Fixierstrebe 16 weist eine derartige Länge und Form auf, dass sie bei dem am nicht dargestellten Ende der Fördervorrichtung 1 erfolgenden Abtauchen des Antriebselements 5 mit dem daran befestigten Schubelement 2 das Kurvenelement 13 in eine Position zwingt, in welcher der Mitnehmer 6 des Schubelements 2 im Wesentlichen in der Schubstellung bleibt. Es ist demnach erwünscht, dass der Mitnehmer 6 in einer aufrechten Stellung abtaucht, damit er ein von ihm gefördertes Druckprodukt 17 (Fig. 5) nicht weiter beaufschlagt, so dass dieses unbeschädigt und mit der gleichen Geschwindigkeit an eine nicht dargestellte Folgemaschine übergeben werden kann. Zu erwähnen ist auch, dass der Träger 3 selbstverständlich drehbar am jeweiligen Kettenglied 4 angebracht ist. Wenn das Schubelement 2 am Ende der Fördervorrichtung 1 in den Bereich einer hier nicht dargestellten Umlenkrolle eintritt und beginnt abzutauchen, dann "schiebt" die starre Fixierstrebe 16 den unteren Teil des Schubelements 2 in Förderrichtung F nach vorne, so dass das Schubelement 2 bzgl. des Antriebselements 5 eine Drehung entgegen des Uhrzeigersinns vollzieht. Auf diese Weise wird die aufrechte Position des Schubelements 2 beibehalten.

Eine Stellschraube 18 zur Einstellung der Position des Läufers 12 ist am Arm 7 des Schubelements 2 angebracht und erstreckt sich im Wesentlichen entlang des Arms 7. Wird die von oberhalb des Arms 7 beaufschlagbare Stellschraube 18 nach unten gedreht, so drückt ihre untere Spitze gegen das Halteelement 8 und verschiebt somit den Läufer 12 nach unten, was nachfolgend im Zusammenhang mit Fig. 3 näher erläutert wird.

Fig. 3 zeigt eine Seitenansicht der bevorzugten Ausführungsform der Fördervorrichtung 1 mit dem in eine Zwischenstellung geschwenkten Mitnehmer 6. Stromauf seiner Führungsfläche 15 weist das Kurvenelement 13 eine Ausnehmung 19 zur Aufnahme des Läufers 12 auf. Eine Position des Läufers 12 in der Ausnehmung 19 entspricht der in den Fig. 1 und 2 gezeigten Schubstellung des Mitnehmers 6 und eine Position des Läufers 12 auf der Führungsfläche 15 entspricht der in den Fig. 3 bzw. 4 gezeigten Zwischenstellung bzw. ausgeschwenkten Stellung des Mitnehmers 6. Durch Anziehen oder Lockern der Stellschraube 18 kann eine Änderung der Lage des Läufers 12 in der Ausnehmung 19 bewirkt und damit die Auslösekraft des Läufers 12 eingestellt werden. Dabei ist die Auslösekraft diejenige Kraft, welche den Läufer 12 aus seiner Position in der Ausnehmung 19 in seine Position auf der Führungsfläche 15 bewegt. Mit anderen Worten wird durch die Auslösekraft der Übergang zwischen der Ausnehmung 19 und der Führungsfläche 15 überwunden. Wird also die Stellschraube 18 nach unten bewegt, so wird der Läufer 12 ebenfalls nach unten geschoben und bewegt sich ein Stück weit aus der Ausnehmung 19. Dadurch wird eine kleinere Auslösekraft benötigt, um den Läufer 12 aus der Ausnehmung 19 zu bewegen. Die Auslösekraft entspricht somit einer Mindestkraft, welche auf den Mitnehmer 6 ausgeübt werden muss, beispielsweise von einem Hindernis, wie einem Finger einer Bedienperson, damit der Mitnehmer 6 nachgibt und beginnt, um seinen ersten Lagerpunkt 7a auszuschwenken. Typischerweise wird eine Kippschwelle von maximal 150 Newton gesetzt, wobei dieser Wert beispielhaft ist und variiert werden kann. Vorteilhaft kann durch die Einstellbarkeit der Auslösekraft auch die massgebende Stelle der Einwirkung der Mindestkraft am Mitnehmer 6 bestimmt werden, was sich aufgrund des Hebelgesetzes ergibt. Wird eine konstante auf den Mitnehmer 6 wirkende Mindestkraft festgelegt, so kann bestimmt werden, in welchem Abstand vom ersten Lagerpunkt 7a diese Kraft zum Auslösen der Schwenkbewegung wirken soll.

Je mehr der Mitnehmer 6 durch die Einwirkung der Kraft des Hindernisses entgegen der Uhrzeigerrichtung schwenkt, desto mehr spannt sich das Federelement 9. Die zunehmende Spannung des Federelements 9 ergibt sich daraus, dass die Führungsfläche 15 des Kurvenelements 13 derart ausgestaltet ist, dass ein Abstand 11 des Lagerpunktes 9b und damit des Läufers 12 vom Befestigungspunkt 9a (Fig. 2, Fig. 4) beim Ausschwenken des Mitnehmers 6 ständig zunimmt. Beim Erreichen des Anschlags 14 hat die Federkraft ihren maximalen Wert angenommen.

Fig. 4 zeigt eine Seitenansicht der bevorzugten Ausführungsform der Fördervorrichtung 1 mit dem Mitnehmer 6 in ausgeschwenkter Stellung. Diese Stellung entspricht der grössten Auslenkung des Läufers 12, dessen Weg auf der Führungsfläche 15 durch den in dieser Darstellung nicht sichtbaren Anschlag 14 begrenzt ist. Wirkt die Kraft des Hindernisses nicht mehr auf den Mitnehmer 6, so sorgt die nachfolgend als Rückstellkraft bezeichnete Federkraft dafür, dass der Läufer 12 wieder in Richtung der Ausnehmung 19 bewegt wird und sich der Mitnehmer 6 dadurch selbsttätig aufrichtet. Dies trifft auch für jede Zwischenstellung des Mitnehmers 6, wie z.B. in Fig. 3 gezeigt, zu.

Die Rückstellkraft für das selbsttätige Schwenken des Mitnehmers 6 aus der ausgeschwenkten Stellung in die Schubstellung und wieder zurück kann eingestellt werden, indem der Mitnehmer 6 gegen einen Mitnehmer unterschiedlicher Form und/oder Ausmasse und/oder indem das Federelement 9 gegen ein Federelement mit unterschiedlicher Federkonstante und/oder indem das Kurvenelement 13 gegen ein Kurvenelement mit unterschiedlicher Führungsfläche 15 ausgetauscht wird. Die Rückstellkraft kann auch durch Verschwenken des Kurvenelements 13 verstellt werden. Dies kann beispielsweise durch eine verstellbare Befestigung des Kurvenelements 13 am Träger 3 erreicht werden. Auf diese Weise sind natürlich auch die Auslösekraft sowie die zum Ausschwenken erforderliche Kraft einstellbar.

Selbstverständlich nimmt die Rückstellkraft abhängig von der Ausführung der Krümmung des Kurvenelements 13 gemäss einem bestimmten Verlauf ab. Die Krümmung kann z.B. so ausgeführt werden, dass der Mitnehmer 6 beim Zurückschwenken in die Schubstellung immer langsamer wird, wodurch die Gefahr einer Verletzung durch einen emporschnellenden Mitnehmer 6 minimiert wird.

Um die in Fig. 2 bis Fig. 4 dargestellte Bewegungsabfolge bzw. die dargestellten Stellungen des Mitnehmers 6 zu erreichen, kann zusammenfassend gesagt werden, dass der Läufer 12 in der Schubstellung des Mitnehmers 6 mindestens teilweise in der an die Führungsfläche 15 des Kurvenelements 13 anschliessenden Ausnehmung 19 ruht, dass für das Auslösen einer Schwenkbewegung zunächst eine durch ein Heraustreten des Läufers 12 aus der Ausnehmung 19, unter Spannung des Federelements 9, definierte Auslösekraft überwunden wird, wodurch der Läufer 12 auf die Führungsfläche 15 gelangt und, dass der Mitnehmer 6 nach Wegfall der Kraft des Hindernisses selbsttätig in die Schubstellung zurückschwenkt, indem er die Führungsfläche 15 in Richtung der Ausnehmung 19 durchläuft und wieder in diese eintritt.

Fig. 5 zeigt eine Ansicht der bevorzugten Ausführungsform der Fördervorrichtung 1, dargestellt entgegen der Förderrichtung F. Die Fördervorrichtung 1 besitzt einen Förderkanal 20 in dem ein Druckprodukt 17 auf einer Auflagefläche 21 eines Tisches 22 mit dem in Schubstellung befindlichen Mitnehmer 6 in Förderrichtung F transportiert und dabei mittels beidseitiger Begrenzungen 23 gegen seitliches Verrutschen gesichert wird. Wie dargestellt, ist das das Schubelement 2 tragende Antriebselement 5 rechts vom Schubelement 2 angeordnet. Je nach Auslegung kann das Antriebselement 5 natürlich auch links des Schubelements 2 angeordnet werden. Ebenso kann die Fördervorrichtung 1 beidseitig des Antriebselements 5 Mitnehmer 6 aufweisen. Die Mitnehmer 6 können zur Anpassung an unterschiedliche Stapeldicken der Druckprodukte 17 gegen Mitnehmer unterschiedlicher Form und/oder Ausmasse ausgetauscht werden.

In einer zweiten Ausführungsform gemäss Fig. 6 weist das Schubelement 2 ein als Achse des zweiten Lagerpunkts 7b des Arms 7 ausgebildetes Halteelement 8 für das Federelement 9 auf, welches somit gleichzeitig sowohl den Lagerpunkt 9b des Federelements 9, als auch des Läufers 12 bildet. Bei dieser alternativen Variante realisiert ein am Arm 7 angeordnetes Langloch 24 die erforderliche Bewegung des Halteelements 8. Demnach nimmt das Langloch 24 den Lagerpunkt 9b des Federelements 9 auf und dient auch der Führung des Läufers 12. Damit wird der erforderliche Versatz des Läufers 12 in oder entgegen der Wirkung der Kraft des Federelements 9 sowohl beim Hinein- bzw. Herausgleiten des Läufers 12 in die bzw. aus der Ausnehmung 19 als auch bei seiner Bewegung auf der mit einem in Förderrichtung F zunehmenden Radius ausgestatteten Führungsfläche 15 des Kurvenelements 13 gewährleistet. Alternativ kann der Läufer 12 auch bei dieser Ausführungsform beabstandet vom Lagerpunkt 9b am Halteelement 8 angeordnet sein.

Obwohl vorteilhafte Ausführungsformen der Erfindung gezeigt und beschrieben werden, ist die Erfindung nicht auf diese beschränkt, sondern sie kann im Rahmen des Geltungsbereiches der folgenden Ansprüche auf andere Weise ausgeführt und angewendet werden.

## Patentansprüche

1. Fördervorrichtung (1) für Druckprodukte (17), mit einer Auflagefläche (21), einem Antriebselement (5) und mindestens einem daran befestigten Schubelement (2) zum Transport der Druckprodukte (17) durch die Fördervorrichtung (1), wobei das Schubelement (2) mit einem Träger (3) am Antriebselement (5) befestigt ist, einen mit dem Träger (3) in einem ersten Lagerpunkt (7a) schwenkbar verbundenen Arm (7) sowie einen am Arm (7) angeordneten und gegen die Kraft eines Federelements (9) um den ersten Lagerpunkt (7a) ausschwenkbaren Mitnehmer (6) aufweist, **dadurch gekennzeichnet, dass** das Schubelement (2) ein am Träger (3) angeordnetes oder einstückig mit dem Träger (3) ausgebildetes Kurvenelement (13) mit einer Führungsfläche (15) für einen am Arm (7) angeordneten Läufer (12) und das Federelement (9) einen von der Führungsfläche (15) abgewandten Befestigungspunkt (9a) sowie am Arm (7) einen der Führungsfläche (15) zugewandten Lagerpunkt (9b) aufweist, wobei der Läufer (12) vom Federelement (9) an die Führungsfläche (15) angedrückt und zum Aus- bzw. Einschwenken des Mitnehmers (6) auf der Führungsfläche (15) bewegbar ausgebildet ist, und wobei die Führungsfläche (15) derart ausgestaltet ist, dass ein Abstand (11) des Lagerpunktes (9b) vom Befestigungspunkt (9a) beim Ausschwenken des Mitnehmers (6) ständig zunimmt.

2. Fördervorrichtung nach Anspruch 1, **dadurch gekennzeichnet, dass** der Mitnehmer (6) durch das Federelement (9) aus jeder Position des Läufers (12) auf der Führungsfläche (15) selbsttätig einschwenkbar ausgebildet ist.

3. Fördervorrichtung nach Anspruch 1 oder 2, **dadurch gekennzeichnet, dass** im Kurvenelement (13), stromauf der Führungsfläche (15), eine Ausnehmung (19) zur Aufnahme des Läufers (12) vorgesehen ist, wobei eine Position des Läufers (12) in der Ausnehmung (19) einer aufrechten Schubstellung des Mitnehmers (6) und eine Position des Läufers (12) auf der Führungsfläche (15) einer ausgeschwenkten Stellung des Mitnehmers (6) oder einer Zwischenstellung zwischen der Schubstellung und der ausgeschwenkten Stellung entspricht.

4. Fördervorrichtung nach Anspruch 3, **dadurch gekennzeichnet, dass** am Arm (7) des Schubelements (2) eine zur Einstellung der Position des Läufers (12) in der Ausnehmung (19) dienende Stellschraube (18) angeordnet ist.

5. Fördervorrichtung nach einem der Ansprüche 1 bis 4, **dadurch gekennzeichnet, dass** die Führungsfläche (15) einen Anschlag (14), zur Begrenzung der Bewegung des Läufers (12) auf der Führungsfläche (15) aufweist.

6. Fördervorrichtung nach einem der Ansprüche 1 bis 5, **dadurch gekennzeichnet, dass** der Läufer (12) als Rollelement, insbesondere als Kugellager, ausgebildet ist.

7. Fördervorrichtung nach einem der Ansprüche 1 bis 6, **dadurch gekennzeichnet, dass** stromauf des Schubelements (2) eine Fixierstrebe (16) angeordnet und in einem ersten Fixierpunkt (16a) mit dem Kurvenelement (13) sowie in einem zweiten Fixierpunkt (16b) mit dem Antriebselement (5) verbunden ist.

8. Fördervorrichtung nach einem der Ansprüche 1 bis 7, **dadurch gekennzeichnet, dass** der Mitnehmer (6) und/oder das Kurvenelement (13) und/oder das Federelement (9) auswechselbar sind, insbesondere mit einem Mitnehmer (6) und/oder ein Kurvenelement (13) und/oder einem Federelement (9) unterschiedlicher Form und/oder Ausmasse.

9. Fördervorrichtung nach einem der Ansprüche 1 bis 8, **dadurch gekennzeichnet, dass** beabstandet vom ersten Lagerpunkt (7a) ein zweiter Lagerpunkt (7b) am Arm (7) angeordnet ist, wobei im zweiten Lagerpunkt (7b) ein den Lagerpunkt (9b) des Federelements (9) und/oder ein den Läufer (12) aufnehmendes Halteelement (8) bewegbar angeordnet ist.

10. Fördervorrichtung nach einem der Ansprüche 1 bis 9, **dadurch gekennzeichnet, dass** am Arm (7) ein im Wesentlichen parallel zum Federelement (9) ausgerichtetes Langloch (24) angeordnet ist, wobei das Langloch (24) den Lagerpunkt (9b) des Federelements (9) aufnimmt.

11. Verfahren zum Verschwenken eines Mitnehmers (6) eines Schubelements (2) der Fördervorrichtung (1) nach einem der Ansprüche 1 bis 11, **dadurch gekennzeichnet, dass** der Läufer (12) des Schubelements (2), während des Ausschwenkens des Mitnehmers (6) aus der Schubstellung in die ausgeschwenkte Stellung und während des Einschwenkens des Mitnehmers (6) aus der ausgeschwenkten Stellung in die Schubstellung auf der Führungsfläche (15) des am Träger (3) angebrachten Kurvenelements (13) bewegt und dabei vom Federelement (9) an die Führungsfläche (15) angedrückt wird, wobei ein Abstand (11) des Lagerpunktes (9b) vom Befestigungspunkt (9a) beim Ausschwenken des Mitnehmers (6) ständig zunimmt und beim Einschwenken des Mitnehmers (6) ständig abnimmt.

12. Verfahren nach Anspruch 11, **dadurch gekennzeichnet, dass** der Läufer (12) in der Schubstellung des Mitnehmers (6) in einer stromauf der Führungsfläche (15) des Kurvenelements (13) anschliessenden Ausnehmung (19) ruht, dass zum Auslösen einer Ausschwenkbewegung des Mitnehmers (6) zunächst eine definierte Vorspannkraft des Federelements (9) überwunden wird, wodurch der Läufer (12) aus der Ausnehmung (19) heraus auf die Führungsfläche (15) gelangt, und dass der Mitnehmer (6) selbsttätig wieder in die Schubstellung einschwenkt, indem der Läufer (12) unter Wirkung einer Rückstellkraft des Federelements (9) auf der Führungsfläche (15) in Richtung der Ausnehmung (19) bewegt und in diese eingeführt wird.

13. Verfahren nach Anspruch 12, **dadurch gekennzeichnet, dass** die Vorspannkraft des Federelements (9) durch eine mittels Verstellen einer Stellschraube (18) erfolgende Änderung einer Tiefe der Lage des Läufers (12) in der Ausnehmung (19) eingestellt wird.

14. Verfahren nach Anspruch 12 oder 13, **dadurch gekennzeichnet, dass** die Rückstellkraft für das selbsttätige Einschwenken des Mitnehmers (6) aus der ausgeschwenkten Stellung in die Schubstellung verstellbar ist, indem der Mitnehmer (6) gegen einen Mitnehmer unterschiedlicher Form und/oder Ausmasse und/oder das Federelement (9) gegen ein Federelement mit unterschiedlicher Federkonstante und/oder das Kurvenelement (13) gegen ein Kurvenelement mit unterschiedlicher Führungsfläche (15) ausgetauscht wird.

15. Verfahren nach Anspruch 12 oder 13, **dadurch gekennzeichnet, dass** die Rückstellkraft für das selbsttätige Einschwenken des Mitnehmers (6) aus der ausgeschwenkten Stellung in die Schubstellung durch ein Schwenken des Kurvenelements (13) verstellt wird.

16. Verfahren nach einem der Ansprüche 11 bis 15, **dadurch gekennzeichnet, dass** eine stromauf des Schubelements (2) angeordnete und in einem ersten Fixierpunkt (16a) mit dem Kurvenelement (13) sowie in einem zweiten Fixierpunkt (16b) mit dem Antriebselement (5) verbundene Fixierstrebe (16) eine derartige Länge und Form aufweist, dass das Kurvenelement (13) beim Abtauchen des Schubelements (2) am Ende des Antriebselements (5) in eine Position gezwungen wird, in welcher der Mitnehmer (6) im Wesentlichen in der Schubstellung bleibt.

17. Einsteckmaschine mit einer Fördervorrichtung (1) nach einem der Ansprüche 1 bis 10, **dadurch gekennzeichnet, dass** die Fördervorrichtung (1) in regelmässigen Anständen am Antriebselement (5) angeordnete Schubelemente (2) aufweist.
